# EUROPÄISCHE PATENTSCHRIFT

(11) **EP 3 256 351 B1**
(45) Veröffentlichungstag und Bekanntmachung des Hinweises auf die Patenterteilung: **16.01.2019**
(21) Anmeldenummer: 16701174.1
(22) Anmeldetag: 22.01.2016
(51) Int. Cl.: B60S 1/04, B60S 1/18, B60S 1/24

(54) **SCHEIBENWISCHERANTRIEB MIT MECHANISCHEM HALTEMITTEL**
WINDSCREEN WIPER DRIVE WITH MECHANICAL RETAINING MEANS
ENTRAÎNEMENT D'ESSUIE-GLACE MUNI D'UN MOYEN D'ARRÊT MÉCANIQUE

(30) Priorität: 10.02.2015 DE 102015202307
(43) Veröffentlichungstag der Anmeldung: 20.12.2017
(73) Patentinhaber: Robert Bosch GmbH, 70442 Stuttgart (DE)
(72) Erfinder: MAYER, Stephan, 77855 Achern (DE); WEILER, Michael, 77815 Buehl (DE); METZ, Ulrich, 77855 Achern (DE); BOOS, Tino, 76532 Baden-Baden (DE); VAN DE ROVAART, Robert-Jan, 77833 Ottersweier (DE); BIANK, Andreas, 67160 Oberlauterbach (FR)
(86) Internationale Anmeldenummer: PCT/EP2016/051285
(87) Internationale Veröffentlichungsnummer: WO 2016/128197

(56) Entgegenhaltungen:
- EP-A2- 2 011 703
- DE-A1- 10 312 982
- US-A1- 2010 139 025

## Beschreibung

### Stand der Technik

Die vorliegende Erfindung betrifft einen Scheibenwischerantrieb zum Antrieb zumindest eines ersten Scheibenwischers eines Kraftfahrzeugs, der einen Elektromotor umfasst, der zum Antrieb einer Antriebswelle vorgesehen ist, die sich in Richtung einer Antriebsachse erstreckt, und in einem Betriebszustand um die Antriebsachse
- in eine Drehrichtung zu einer oberen Wendelage, und
- gegen die Drehrichtung in eine untere Wendelage
drehbar ist. Die vorliegende Erfindung betrifft weiterhin ein Kraftfahrzeug mit einem solchen Scheibenwischerantrieb sowie ein Verfahren zum Betreiben des Scheibenwischerantriebs.

Die Scheibenwischer von Kraftfahrzeugen sind durch die das Fahrzeug umgebende Umströmung während der Fahrt sowohl im Betrieb als auch bei Stillstand einer Windlast ausgesetzt. Bei ungünstigen Bedingungen wie beispielsweise einer sehr starken Umströmung des Kraftfahrzeugs, einer ungünstigen Motorhaubengeometrie, zu geringer Selbsthemmung des Gestänges des Scheibenwischerantriebs oder großer Angriffsfläche der Scheibenwischer können diese durch die Windlast von ihrer Parkstellung aus auf die Fensterscheibe gezogen werden. Ein solches ungewolltes auf die Fensterscheibe ziehen der Scheibenwischer kann auch beim Durchfahren einer Kraftfahrzeug- Waschanlage auftreten.

Bei Scheibenwischerantrieben mit Elektromotoren wird dem ungewollten Verstellen der Scheibenwischer herkömmlich entgegen gewirkt, indem der Elektromotor so bestromt wird, dass die Scheibenwischer in der Parkstellung gehalten werden. Das Bestromen kann jedoch bei lang anhaltender Belastung zu einer thermischen Überlastung des Elektromotors führen.

Die EP2011703, US20100139025 und die DE10312982 zeigen gattungsgemäße Merkmale.

### Offenbarung der Erfindung

Aufgabe der vorliegenden Erfindung ist es, einen Scheibenwischerantrieb für ein Kraftfahrzeug zu schaffen, bei dem die Scheibenwischer nicht ungewollt, insbesondere aufgrund einer Windlast, auf die Fensterscheibe gezogen werden, ohne den Elektromotor dauerhaft bestromen zu müssen.

Die Aufgabe wird gelöst mit einer Scheibenwischerantrieb mit den Merkmalen des unabhängigen Patentanspruchs 1, einem Kraftfahrzeug mit dem Scheibenwischerantrieb mit den Merkmalen des unabhängigen Patentanspruchs 8 sowie einem Verfahren zum Betreiben des Scheibenwischerantriebs mit den Merkmalen des unabhängigen Patentanspruchs 9. Vorteilhafte Ausführungsformen sind den abhängigen Patentansprüchen entnehmbar.

Dafür wird ein Scheibenwischerantrieb zum Antrieb zumindest eines ersten Scheibenwischers eines Kraftfahrzeugs geschaffen, der einen Elektromotor umfasst, der zum Antrieb einer Antriebswelle vorgesehen ist, die sich in Richtung einer Antriebsachse erstreckt, und in einem Betriebszustand um die Antriebsachse
- in eine Drehrichtung zu einer oberen Wendelage, und
- gegen die Drehrichtung in eine untere Wendelage
drehbar ist.

Der Scheibenwischerantrieb zeichnet sich dadurch aus, dass er ein mechanisches Haltemittel umfasst, das dazu vorgesehen ist, die Antriebswelle in einem belasteten Ruhezustand gegen ein ungewolltes Drehen in die Drehrichtung in einer Haltestellung, die gegen die Drehrichtung unterhalb, d. h. hinter, der unteren Wendlage angeordnet ist, lösbar zu halten. Dabei wird das Haltemittel als ein Schnappmittel ausgebildet, welches sich bei Überschreiten einer Haltekraft, die größer als eine obere Grenzlast ist, löst. Die Haltekraft ist so ausgelegt, dass sie die, insbesondere im Betrieb des Kraftfahrzeugs, auftretende Windlast auch bei starker Umströmung überschreitet. Die Antriebswelle wird daher auch bei starker Umströmung durch das Haltemittel sicher gehalten. Durch Antrieb des Elektromotors in die Drehrichtung mit einer Kraft, die die Haltekraft überschreitet, ist die Antriebswelle aber aus dem Haltemittel wieder lösbar.

Im belasteten Ruhezustand überschreitet eine auf den Scheibenwischerantrieb und/oder den Scheibenwischer wirkende Windlast eine untere Grenzlast, durch die der Scheibenwischer in Richtung der Fensterscheibe gezogen wird. Das Haltemittel ist so ausgelegt, dass es den Scheibenwischer trotz der Windlast hält.

Vorzugsweise ist die Antriebswelle in einem unbelasteten Ruhezustand um die Antriebsachse gegen die Drehrichtung in eine Parkstellung drehbar. Bevorzugt ist die untere Wendelage dabei gegen die Drehrichtung oberhalb, d. h. vor, der Parkstellung angeordnet. Besonders bevorzugt ist die Haltestellung gegen die Drehrichtung unterhalb, d. h. hinter, der Parkstellung angeordnet. Vorzugsweise ist die Parkstellung daher zwischen der unteren Wendelage und der Haltestellung angeordnet. Im unbelasteten Ruhezustand ist die Antriebswelle dieser Ausführungsform daher gegen die Drehrichtung unterhalb der unteren Wendelage in die Parkstellung, und im belasteten Ruhezustand gegen die Drehrichtung unterhalb der Parkstellung in die Haltestellung drehbar. Das Haltemittel hält die Antriebswelle dieser Ausführungsform nur im belasteten Ruhezustand. Dadurch entstehen im unbelasteten Ruhezustand keine durch das Haltemittel verursachten Schnappgeräusche und der Verschleiß des Haltemittels ist gering.

Bevorzugt ist auch eine Ausführungsform, bei der die Parkstellung auf Höhe der Haltestellung angeordnet ist. Dann wird die Antriebswelle im Ruhezustand immer mit dem Haltemittel gehalten, wobei aber Schnappgeräusche und ein Verschleiß beim Einrasten des Haltemittels entstehen.

Vorzugsweise weist der Scheibenwischerantrieb ein Gestänge auf, welches durch Drehen der Antriebswelle verstellbar, insbesondere verschiebbar und/oder verdrehbar, ist. Dabei ist das Haltemittel bevorzugt so vorgesehen, dass es mit dem Gestänge oder dem Scheibenwischer zusammenwirkt. Bei einem Scheibenwischerantrieb mit nur einem Scheibenwischer ist das Gestänge bevorzugt so ausgelegt, insbesondere so lang, dass die mit einem herkömmlichen Schnappmittel bewirkte Haltekraft ausreichend groß ist, um die Antriebswelle gegen ein ungewolltes Drehen zu sichern.

In einer besonders bevorzugten Ausführungsform umfasst der Scheibenwischer ein Drehlager, welches mittels des Gestänges mit der Antriebswelle verbunden ist, so dass es sich beim Drehen der Antriebswelle dreht. Besonders bevorzugt sind der erste Scheibenwischer an der Antriebswelle, und ein zweiter Scheibenwischer am Drehlager drehfest befestigt. In dieser Ausführungsform ist der Scheibenwischerantrieb daher zum Antrieb von zwei Scheibenwischern ausgelegt.

Zum drehfesten Befestigen der Scheibenwischer sind bevorzugt ein erstes Befestigungsmittel, vorzugsweise ein erster Zapfen, und am Drehlager ein zweites Befestigungsmittel, vorzugsweise ein zweiter Zapfen, vorgesehen. Bevorzugt sind der erste Zapfen fluchtend zur Antriebsachse, und der zweite Zapfen fluchtend zu einer Drehlagerachse, um die sich das Drehlager dreht, angeordnet. Besonders bevorzugt sind die Scheibenwischer an den Zapfen jeweils lösbar befestigbar, so dass sie auswechselbar sind.

Das Gestänge dieser Ausführungsform umfasst bevorzugt eine Kurbel, die an der Antriebswelle angeordnet ist, eine Lagerplatte, die am Drehlager angeordnet ist und eine Querverbindungsstange, die die Kurbel und die Lagerplatte miteinander verbindet. Vorzugsweise ist das Haltemittel dazu vorgesehen, mit der Querverbindungsstange, der Lagerplatte, der Kurbel oder einem der Scheibenwischer zusammen zu wirken. Dabei ist es besonders bevorzugt, dass für jeden Scheibenwischer jeweils ein Haltemittel vorgesehen ist.

Die Aufgabe wird weiterhin gelöst mit einem Kraftfahrzeug mit einem solchen Scheibenwischerantrieb. Der Antrieb hat den Vorteil, dass die Antriebswelle im belasteten Ruhezustand in die Haltestellung drehbar ist. In der Haltestellung wirkt eine Windlast auf den Scheibenwischerantrieb, die die untere Grenzlast, durch die die Scheibenwischer in Richtung der Fensterscheibe gezogen werden, überschreitet. In der Haltestellung wird die Antriebswelle erfindungsgemäß mit dem mechanischen Haltemittel gehalten, so dass sie sich trotz der Windlast nicht in die Drehrichtung dreht. Der Elektromotor des Scheibenwischerantriebs dieser Ausführungsform wird daher nur sehr kurzzeitig belastet, nämlich zum Drehen der Antriebswelle in die Haltestellung.

Die Aufgabe wird weiterhin gelöst mit einem Verfahren zum Betreiben eines solchen Scheibenwischerantriebs, bei dem die Antriebswelle in die Haltestellung gedreht wird, wenn eine Steuerung, insbesondere eine Scheibenwischersteuerung oder eine Fahrzeugsteuerung, den belasteten Ruhezustand erfasst. Dabei ist es bevorzugt, dass die Steuerung den belasteten Ruhezustand erfasst, wenn der Scheibenwischerantrieb sich im unbelasteten Ruhezustand, befindet, und
- Das Kraftfahrzeug eine Grenzgeschwindigkeit überschreitet, oder
- Sich die Antriebswelle in die Drehrichtung dreht.
Wenn das Kraftfahrzeug die Grenzgeschwindigkeit überschreitet, erfolgt das Umschalten vorsorglich. Wenn sich die Antriebswelle in die Drehrichtung dreht, obwohl sich der Scheibenwischerantrieb im unbelasteten Ruhezustand, d. h. außer Betrieb, befindet, erfolgt das Drehen ungewollt. Durch das Drehen der Antriebswelle in die Haltestellung wird diese mit dem Haltemittel in der Haltestellung gesichert. Dadurch wird die Sicht für den Fahrer nicht ungewollt durch die Scheibenwischer behindert.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt in **(a)** einen Scheibenwischerantrieb im unbelasteten Ruhezustand, und in **(b)** den Scheibenwischerantrieb aus **(a)** im belasteten Ruhezustand, und
- **Fig. 2**: zeigt eine Anordnung aus dem Scheibenwischerantrieb aus **Fig. 1** und zwei am Scheibenwischerantrieb angeordneten Scheibenwischern.

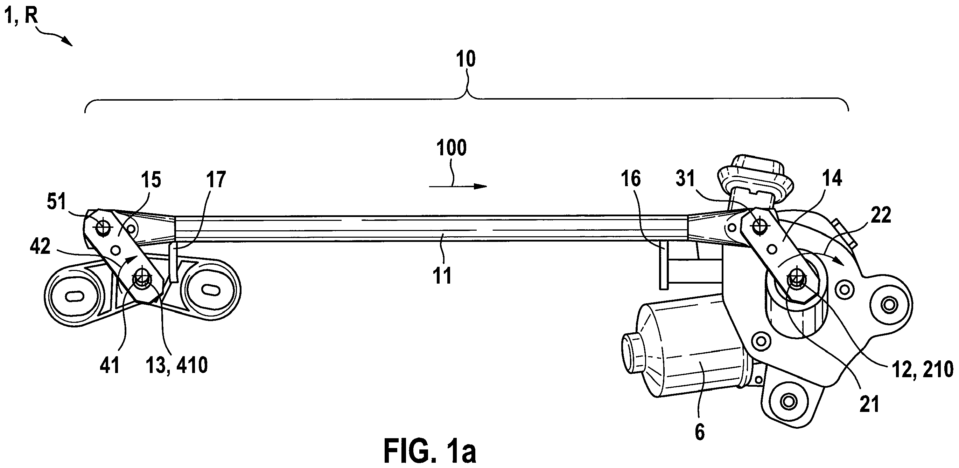

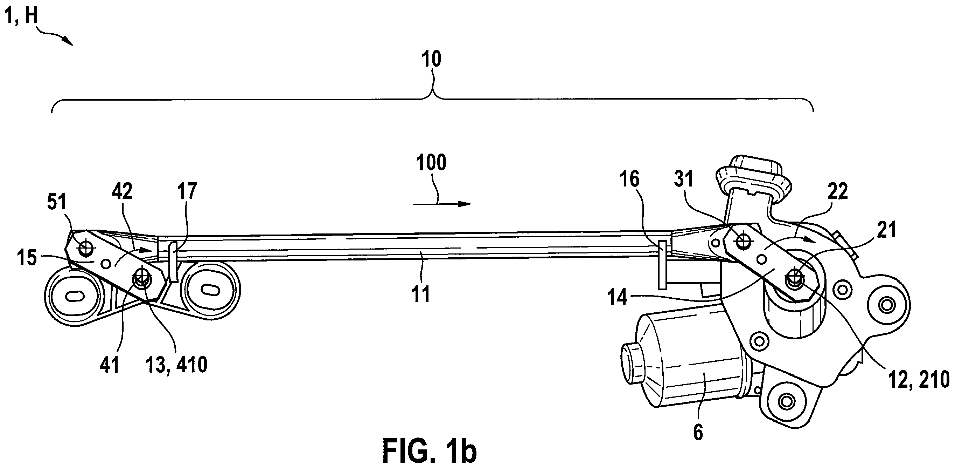

Der Scheibenwischerantrieb 1 in **Fig. 1** ist zum Antrieb eines ersten Scheibenwischers 81 und eines zweiten Scheibenwischers 82 eines Kraftfahrzeugs (nicht gezeigt) vorgesehen. Er umfasst einen Elektromotor 6, der zum Antrieb einer Antriebswelle 210 vorgesehen ist, die sich in Richtung einer Antriebsachse 21 erstreckt und um die Antriebsachse in und gegen eine Drehrichtung 22 drehbar ist. Zur Untersetzung der Drehzahl des Elektromotors 6 ist ein Untersetzungsgetriebe (nicht gezeigt) vorgesehen. Zudem weist der Scheibenwischerantrieb 1 eine Scheibenwischersteuerung (nicht gezeigt) auf, die dazu ausgebildet ist, die Drehrichtung und die Drehgeschwindigkeit der Antriebswelle 210 zu steuern.

Der Scheibenwischerantrieb 1 weist zudem ein Drehlager 410 auf, das um eine Drehlagerachse 41 in und gegen eine Drehlagerrichtung 42 drehbar ist. Das Drehlager 410 ist mittels eines Gestänges 10 mit der Antriebswelle 210 verbunden. Das Gestänge 10 umfasst eine Kurbel 14, eine Lagerplatte 15 und eine Querverbindungsstange 11. Die Kurbel 14 ist drehfest an der Antriebswelle 210 angeordnet, so dass sie sich beim Drehen der Antriebswelle 210 mit dieser dreht. Die Lagerplatte 15 ist drehfest am Drehlager 410 angeordnet, so dass sie sich beim Drehen des Drehlagers 410 mit diesem dreht. Die Querverbindungsstange 11 verbindet die Kurbel 14 mit der Lagerplatte 15. Sie ist um eine Kurbelachse 31 drehbar an der Kurbel 14, und um eine Lagerplattenachse 51 drehbar an der Lagerplatte 15 festgelegt. Beim Drehen der Antriebswelle 210 in die Drehrichtung 22 wird sie daher in eine Längsrichtung 100, in die sie sich erstreckt, verschoben. Dadurch dreht sich das Drehlager 410, wenn sich die Antriebswelle 210 dreht.

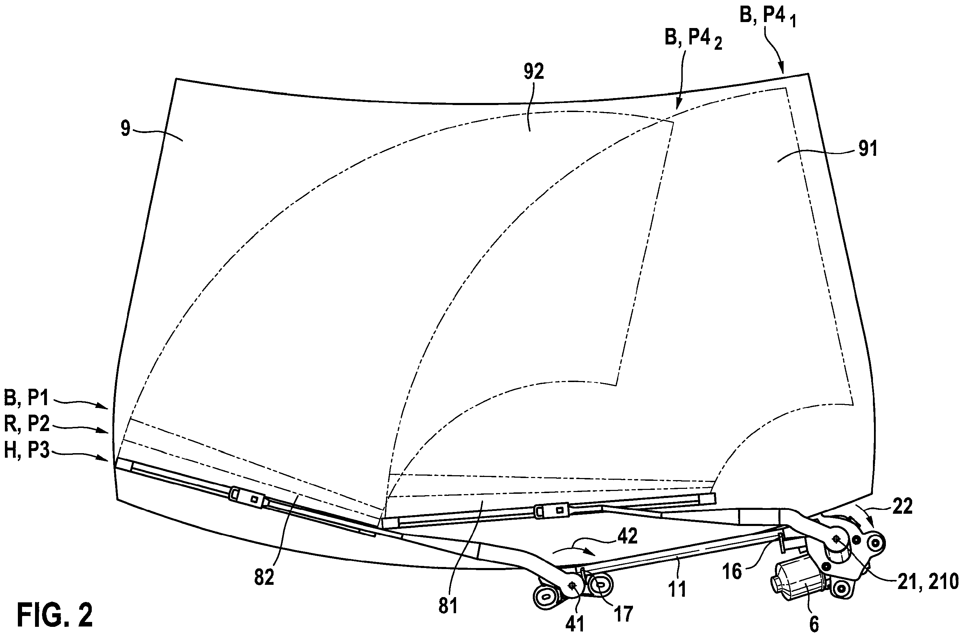

Der erste Scheibenwischer 81 ist an der Antriebswelle 210, und der zweite Scheibenwischer 82 am Drehlager 410 drehfest befestigt (s. **Fig. 2**). Dafür ist ein erstes Befestigungsmittel 12 fluchtend zur Antriebswelle 210, und ein zweites Befestigungsmittel 13 fluchtend zur Drehlagerachse 41 vorgesehen. Die Befestigungsmittel 12, 13 sind hier jeweils als Zapfen ausgebildet. Im Folgenden werden die Begriffe Befestigungsmittel und Zapfen 12, 13 synonym verwendet. Die Scheibenwischer 81, 82 sind an den Zapfen 12, 13 lösbar befestigbar, so dass sie austauschbar sind.

In einem Betriebszustand B ist die Antriebswelle 210 um die Antriebsachse 21 in Drehrichtung 22 zu einer oberen Wendelage P4 (s. **Fig. 2**), und gegen die Drehrichtung 22 in eine untere Wendelage P1 (s. **Fig. 2**) drehbar. Dadurch werden die Scheibenwischer 81, 82 im Betriebzustand B zwischen der unteren und der oberen Wendelage P1, P4 hin und her bewegt.

Der Betriebszustand B des Scheibenwischerantriebs 1 wird durch den Fahrer durch Einschalten eines Schalters (nicht gezeigt) oder mittels eines Regensensors (nicht gezeigt) eingestellt, wenn dieser das Überschreiten einer Grenzmenge Niederschlag anzeigt. Dies ist hinlänglich bekannt und wird hier nicht weiter erläutert. Durch Ausschalten des Schalters oder wenn der Regensensor das Unterschreiten der Grenzmenge Niederschlag anzeigt wird der Scheibenwischerantrieb 1 vom Betriebszustand in einen unbelasteten Ruhezustand R geschaltet. Dies erfolgt bevorzugt mittels der Scheibenwischersteuerung oder einer Fahrzeugsteuerung.

Bei dem Scheibenwischerantrieb 1 der gezeigten Ausführungsform ist die Antriebswelle 210 im unbelasteten Ruhezustand R um die Antriebsachse 21 gegen die Drehrichtung 22 in eine Parkstellung P2 drehbar (s. **Fig. 2**). Durch Umschalten des Scheibenwischerantriebs 1 vom unbelasteten Ruhezustand R in den Betriebszustand B ist sie ausgehend von der Parkstellung P2 in Drehrichtung 22 zurück in die untere Wendelage P1 drehbar.

Zudem ist die Antriebswelle 210 des Scheibenwischerantriebs 1 der gezeigten Ausführungsform in einen belasteten Ruhezustand H schaltbar. Dafür weist der Scheibenwischerantrieb 1 für jeden Scheibenwischer 81, 82 jeweils ein mechanisches Haltemittel 16, 17 auf. Die Haltemittel 16, 17 sind dazu vorgesehen, die Antriebswelle 210 im belasteten Ruhezustand H gegen ein ungewolltes Drehen in die Drehrichtung 22 in einer Haltestellung P3 zu halten. Dabei wird die Antriebswelle 210 lösbar in der Haltestellung P3 gehalten.

Im belasteten Ruhezustand H überschreitet eine auf den Scheibenwischerantrieb 1 wirkende Windlast eine untere Grenzlast, durch die die Scheibenwischer 81, 82 ungewollt in Richtung einer Fensterscheibe 9 (s. **Fig. 2**) des Kraftfahrzeugs gezogen werden. Die Haltemittel 16, 17 sind jeweils so ausgelegt, dass sie die Scheibenwischer 81, 82 trotz der Windlast in der Haltestellung P3 halten. Die Haltestellung P3 ist gegen die Drehrichtung 21 unterhalb der unteren Wendlage P1 angeordnet. In der gezeigten Ausführungsform ist zu zudem unterhalb der Parkstellung P2 angeordnet.

Die Antriebswelle 210 ist im unbelasteten Ruhezustand R um die Antriebsachse 21 gegen die Drehrichtung 22 in eine Parkstellung P2 drehbar (s. **Fig. 2**). Durch Umschalten des Scheibenwischerantriebs 1 vom unbelasteten Ruhezustand R in den belasteten Ruhezustand H ist die Antriebswelle 210 ausgehend von der Parkstellung P2 gegen die Drehrichtung 22 in die Haltestellung P3 drehbar. Sie wird durch Umschalten des Scheibenwischerantriebs 1 vom belasteten Ruhezustand H in den unbelasteten Ruhezustand R oder in den Betriebszustand B ausgehend von der Haltestellung P3 in Drehrichtung 22 zurück in die Parkstellung P2 oder über die Parkstellung P2 hinaus in die untere Wendelage P1 gedreht.

Die Haltemittel 16, 17 sind jeweils als ein Schnappmittel ausgebildet. Sie lösen sich bei Überschreiten einer Haltekraft, die größer als eine obere Grenzlast ist. Die Haltekraft ist so ausgelegt, dass sie die in einem normalen Betrieb des Kraftfahrzeugs auftretende Windlast auch bei starker Umströmung überschreitet. Dabei ist die mit den Haltemitteln 16, 17 gehaltene Antriebswelle 210 aber durch Antrieb des Elektromotors 6 in die Drehrichtung 22 mit einer Kraft, die die Haltekraft überschreitet, aus der Haltestellung P3 wieder lösbar.

In der dargestellten Ausführungsform sind die Haltemittel 16, 17 so angeordnet, dass sie mit der Querverbindungsstange 11 zusammenwirken. In einer bevorzugten Ausführungsform sind sie etwa V- oder U- förmig ausgebildet. Dadurch kann eine Querverbindungsstange 11 verwendet werden, die frei von Gegenhaltemitteln ist. Dabei ist das erste Haltemittel 16 nahe der Kurbel 14 und das zweite Haltemittel 17 nahe der Lagerplatte 15 angeordnet. Die Haltemittel 16, 17 sind daher beide jeweils nahe eines der Scheibenwischer 81, 82 platziert.

**Fig. 1** zeigt in **(a)** den Scheibenwischerantrieb 1 im unbelasteten Ruhezustand R und in **(b)** im belasteten Ruhezustand H. Sichtbar ist, dass die Querverbindungsstange 11 in **Fig. 1 (a)**, also im unbelasteten Ruhezustand R, oberhalb der Haltemittel 16, 17 angeordnet ist, so dass sie nicht mit diesen verrastet. In **Fig. 1 (b)**, also im belasteten Ruhezustand H, ist sie auf Höhe der Haltemittel 16, 17 angeordnet, so dass sie mit den Haltemitteln 16, 17 verrastet ist, und dadurch auch bei Überschreiten der auf den Scheibenwischerantrieb 1 wirkenden oberen Grenzlast auf dieser Höhe gehalten wird. Dadurch ist die Antriebswelle 210 in ihrer Drehposition, nämlich in der Haltestellung P3, gesichert.

Alternativ oder zusätzlich ist es bevorzugt, ein oder mehrere Haltemittel (nicht dargestellt) vorzusehen, die mit der Kurbel 14, der Lagerplatte 15 oder den Scheibenwischern 81, 82 zusammenwirken.

**Fig. 2** zeigt den Scheibenwischerantrieb 1 der **Fig. 1** mit am Scheibenwischerantrieb 1 angeordneten Scheibenwischern 81, 82. Der erste Scheibenwischer 81 ist am ersten Zapfen 12, der fluchtend zur Antriebswelle 210 angeordnet ist, drehfest befestigt. Der zweite Scheibenwischer 82 ist am zweiten Zapfen 13, der fluchtend zur Drehlagerachse 41 angeordnet ist, drehfest befestigt.

Zudem ist eine Fensterscheibe 9 des Kraftfahrzeugs schematisch gezeigt. Auf der Fensterscheibe 9 sind ein erstes Wischfeld 91 des ersten Scheibenwischers 81 und ein zweites Wischfeld 92 des zweiten Scheibenwischers 82 schematisch dargestellt.

Sichtbar sind die untere Wendelage P1, die Parkstellung P2, die Haltestellung P3 und die obere Wendelage P4₁, P4₂. In der **Fig. 2** sind die untere Wendelage P1, die Parkstellung P2 und die Haltestellung P3 nur für den zweiten Scheibenwischer 82 bezeichnet und mit keinem Index versehen. Die obere Wendelage P4₁, P4₂ ist hingegen sowohl für den ersten Scheibenwischer 81 als auch für den zweiten Scheibenwischer 82 dargestellt und daher mit Indizes versehen. Beide oberen Wendelagen P4₁, P4₂ sind im Folgenden mit P4 bezeichnet.

Im Betriebsmodus B werden die Scheibenwischer 81, 82 zwischen der oberen und der unteren Wendelage P4, P1 hin und her bewegt.

Beim Umschalten des Scheibenwischerantriebs 1 vom Betriebsmodus B in den unbelasteten Ruhezustand R wird die Antriebswelle 210 der gezeigten Ausführungsform von der unteren Wendelage P1 gegen die Drehrichtung 22 in die Parkstellung P2 gedreht. Im unbelasteten Ruhezustand R sind die Scheibenwischer 81, 82 in der Parkstellung P2 angeordnet. Beim Schalten vom unbelasteten Ruhezustand R in den Betriebsmodus B wird die Antriebswelle 210, und mit ihr die Scheibenwischer 81, 82, in Drehrichtung 22 zurück in die untere Wendelage P1 gedreht.

Beim Schalten des Scheibenwischerantriebs 1 vom unbelasteten Ruhezustand R in den belasteten Ruhezustand H wird die Antriebswelle 210, und mit ihr die Scheibenwischer 81, 82, gegen die Drehrichtung 22 in die Haltestellung P3 gedreht. Im belasteten Ruhezustand H sind die Scheibenwischer 81, 82 in der Haltestellung P3 angeordnet. Dies zeigt **Fig. 2****.** In der Haltestellung P3 wird die Antriebswelle 210, und werden daher auch die Scheibenwischer 81, 82, mittels der Haltemittel 16, 17 gehalten. Beim Umschalten vom belasteten Ruhezustand H in den unbelasteten Ruhezustand R wird die Antriebswelle 210, und mit ihr die Scheibenwischer 81, 82, in Drehrichtung 22 von der Haltestellung P3 zurück in die Parkstellung P2 gedreht. Dies ist durch Antrieb des Elektromotors 6 mit einer Kraft, die größer als die Haltekraft ist, möglich.

Der Scheibenwischerantrieb 1 wird in die Haltestellung P3 gedreht, wenn die Scheibenwischersteuerung oder eine Fahrzeugsteuerung den belasteten Ruhezustand H erfasst. Der belastete Ruhezustand H tritt ein, wenn das Kraftfahrzeug im unbelasteten Ruhezustand R eine Grenzgeschwindigkeit überschreitet, oder wenn sich die Antriebswelle 210 im unbelasteten Ruhezustand R in die Drehrichtung 22 dreht.

Zum Drehen des Scheibenwischerantriebs 1 in den belasteten Ruhezustand H wird der Elektromotor 6 nur sehr kurzzeitig belastet, so dass keine Gefahr besteht, dass er überlastet wird. Zudem wird der Scheibenwischerantrieb 1 nur im Bedarfsfall, nämlich bei hoher Geschwindigkeit des Kraftfahrzeugs oder wenn sich die Antriebswelle 210 im unbelasteten Ruhezustand R ungewollt dreht, mit den Haltemitteln 16, 17 gehalten. Ein unnötiger Verschleiß der Haltemittel 16, 17 und unnötige Geräusche beim Verrasten/Schnappen der Haltemittel 16, 17 werden daher vermieden.

## Patentansprüche

1. Scheibenwischerantrieb (1) zum Antrieb zumindest eines ersten Scheibenwischers (81) eines Kraftfahrzeugs, der einen Elektromotor (6) umfasst, der zum Antrieb einer Antriebswelle (210) vorgesehen ist, die sich in Richtung einer Antriebsachse (21) erstreckt, und in einem Betriebszustand (B) um die Antriebsachse (21)
• in eine Drehrichtung (22) zu einer oberen Wendelage (P4), und
• gegen die Drehrichtung (22) in eine untere Wendelage (P1) drehbar ist,
**wobei**
der Scheibenwischerantrieb (1) ein mechanisches Haltemittel (16, 17) umfasst, das dazu vorgesehen ist, die Antriebswelle (210) in einem belasteten Ruhezustand (H) gegen ein ungewolltes Drehen in die Drehrichtung (22) in einer Haltestellung (P3), die gegen die Drehrichtung (21) unterhalb der unteren Wendlage (P1) angeordnet ist, lösbar zu halten, **dadurch gekennzeichnet, dass** das Haltemittel (16, 17) ein Schnappmittel ist, welches sich bei Überschreiten einer Haltelast, die größer als eine Windlast ist, löst.

2. Scheibenwischerantrieb (1) nach Anspruch 1, **dadurch gekennzeichnet, dass** die Antriebswelle (210) in einem unbelasteten Ruhezustand (R) um die Antriebsachse (21) gegen die Drehrichtung (22) in eine Parkstellung (P2) drehbar ist, wobei die Haltestellung (P3) unterhalb der Parkstellung (P2) angeordnet ist.

3. Scheibenwischerantrieb (1) nach einem der vorherigen Ansprüche, **dadurch gekennzeichnet, dass** er ein Gestänge (10) umfasst, welches durch Drehen der Antriebswelle (210) verstellbar, insbesondere verschiebbar und/oder verdrehbar, ist.

4. Scheibenwischerantrieb (1) nach einem der vorherigen Ansprüche, **dadurch gekennzeichnet, dass** es ein Drehlager (41) umfasst, welches mittels des Gestänges (10) mit der Antriebswelle (210) verbunden ist, so dass es sich beim Drehen der Antriebswelle (210) dreht, wobei der erste Scheibenwischer (81) an der Antriebswelle (210), und ein zweiter Scheibenwischer (82) am Drehlager (41) drehfest befestigt sind.

5. Scheibenwischerantrieb (1) nach einem der vorherigen Ansprüche, **dadurch gekennzeichnet, dass** das Gestänge (10) eine Kurbel (14), eine Querverbindungsstange (11) und eine Lagerplatte (15) umfasst, wobei das Haltemittel (16, 17) dazu vorgesehen ist, mit der Querverbindungsstange (14), der Lagerplatte (11), der Kurbel (15) und/oder einem der Scheibenwischer (81, 82) zusammen zu wirken.

6. Scheibenwischerantrieb (1) nach einem der vorherigen Ansprüche, **dadurch gekennzeichnet, dass** für jeden Scheibenwischer (81, 82) jeweils ein Haltemittel (16, 17) vorgesehen ist.

7. Kraftfahrzeug mit einem Scheibenwischerantrieb (1) nach Anspruch 1.

8. Verfahren zum Betreiben eines Scheibenwischerantriebs (1) nach einem der Ansprüche 1-6, bei dem die Antriebswelle (210) in die Haltestellung (P3) gedreht wird, wenn eine Steuerung, insbesondere ein Fahrzeugsteuerung, den belasteten Ruhezustand (H) erfasst.

9. Verfahren nach Anspruch 8, **dadurch gekennzeichnet, dass** die Steuerung den belasteten Ruhezustand (H) erfasst, wenn der Scheibenwischerantrieb (1) sich im unbelasteten Ruhezustand (R) befindet, und
• Das Kraftfahrzeug eine Grenzgeschwindigkeit überschreitet, oder
• Sich die Antriebswelle (210) in die Drehrichtung (22) dreht.

## Claims

1. Windscreen wiper drive (1) for driving at least a first windscreen wiper (81) of a motor vehicle, said windscreen wiper drive comprising an electric motor (6) which is provided for driving a drive shaft (210) which extends in the direction of a drive axis (21) and, in an operating state (B), is rotatable about the drive axis (21)
• in a direction of rotation (22) to an upper turning point (P4) and
• counter to the direction of rotation (22) into a lower turning point (P1),
**wherein**
the windscreen wiper drive (1) comprises a mechanical retaining means (16, 17) which is provided in order to releasably retain the drive shaft (210) in a loaded inoperative state (H) in a holding position (P3), which is arranged below the lower turning point (P1) counter to the direction of rotation (21), against inadvertent rotation in the direction of rotation (22), **characterized in that** the retaining means (16, 17) is a snap-action means which is released when a retaining load which is greater than a wind load is exceeded.

2. Windscreen wiper drive (1) according to Claim 1, **characterized in that** the drive shaft (210) in an unloaded inoperative state (R) is rotatable about the drive axis (21) counter to the direction of rotation (22) into a parking position (P2), wherein the retaining position (P3) is arranged below the parking position (P2).

3. Windscreen wiper drive (1) according to either of the preceding claims, **characterized in that** it comprises a linkage (10) which is adjustable, in particular displaceable and/or rotatable, by rotation of the drive shaft (210).

4. Windscreen wiper drive (1) according to one of the preceding claims, **characterized in that** it comprises a rotary bearing (41) which is connected to the drive shaft (210) by means of the linkage (10) such that said rotary bearing rotates when the drive shaft (210) rotates, wherein the first windscreen wiper (81) is fastened to the drive shaft (210) for rotation therewith, and a second windscreen wiper (82) is fastened to the rotary bearing (41) for rotation therewith.

5. Windscreen wiper drive (1) according to one of the preceding claims, **characterized in that** the linkage (10) comprises a crank (14), a transverse connecting rod (11) and a bearing plate (15), wherein the retaining means (16, 17) is provided in order to interact with the transverse connecting rod (14), the bearing plate (11), the crank (15) and/or one of the windscreen wipers (81, 82).

6. Windscreen wiper drive (1) according to one of the preceding claims, **characterized in that** a respective retaining means (16, 17) is provided for each windscreen wiper (81, 82).

7. Motor vehicle with a windscreen wiper drive (1) according to Claim 1.

8. Method for operating a windscreen wiper drive (1) according to one of Claims 1-6, in which the drive shaft (210) is rotated into the retaining position (P3) when a controller, in particular a vehicle controller, detects the loaded inoperative state (H) .

9. Method according to Claim 8, **characterized in that** the controller detects the loaded inoperative state (H) when the windscreen wiper drive (1) is in the unloaded inoperative state (R), and
• the motor vehicle exceeds a limit speed, or
• the drive shaft (210) rotates in the direction of rotation (22).

## Revendications

1. Entraînement d'essuie-glace (1) destiné à l'entraînement d'au moins un premier essuie-glace (81) d'un véhicule automobile, qui comprend un moteur électrique (6) qui est prévu pour l'entraînement d'un arbre d'entraînement (210), qui s'étend dans la direction d'un axe d'entraînement (21) et qui dans un état de fonctionnement (B) peut tourner autour de l'axe d'entraînement (21)
• dans un sens de rotation (22) en direction d'une position d'inversion supérieure (P4), et
• contre le sens de rotation (22) dans une position d'inversion inférieure (P1),
dans lequel l'entraînement d'essuie-glace (1) comprend un moyen de maintien mécanique (16, 17), qui est prévu pour maintenir de façon détachable l'arbre d'entraînement (210) dans un état de repos chargé (H) contre une rotation involontaire dans le sens de rotation (22) dans une position de maintien (P3), qui est disposée en dessous de la position d'inversion inférieure (P1) contre le sens de rotation (21), **caractérisé en ce que** le moyen de maintien (16, 17) est un moyen d'encliquetage, qui se libère en cas de dépassement d'une charge de maintien qui est supérieure à une force du vent.

2. Entraînement d'essuie-glace (1) selon la revendication 1, **caractérisé en ce que** l'arbre d'entraînement (210) dans un état de repos non chargé (R) peut tourner dans une position de parcage (P2) autour de l'axe d'entraînement (21) contre le sens de rotation (22), dans lequel la position de maintien (P3) est disposée en dessous de la position de parcage (P2).

3. Entraînement d'essuie-glace (1) selon l'une quelconque des revendications précédentes, **caractérisé en ce qu'**il comprend une tringlerie (10), qui peut être déplacée, en particulier en translation et/ou en rotation, par rotation de l'arbre d'entraînement (210).

4. Entraînement d'essuie-glace (1) selon l'une quelconque des revendications précédentes, **caractérisé en ce qu'**il comprend un palier rotatif (41), qui est relié à l'arbre d'entraînement (210) au moyen de la tringlerie (10), de telle manière qu'il tourne lors de la rotation de l'arbre d'entraînement (210), dans lequel le premier essuie-glace (81) est fixé sans rotation sur l'arbre d'entraînement (210) et un second essuie-glace (82) est fixé sans rotation sur le palier rotatif (41).

5. Entraînement d'essuie-glace (1) selon l'une quelconque des revendications précédentes, **caractérisé en ce que** la tringlerie (10) comprend une manivelle (14), une barre de liaison transversale (11) et une plaque de palier (15), dans lequel le moyen de maintien (16, 17) est prévu pour coopérer avec la barre de liaison transversale (14), la plaque de palier (11), la manivelle (15) et/ou un des essuie-glace (81, 82).

6. Entraînement d'essuie-glace (1) selon l'une quelconque des revendications précédentes, **caractérisé en ce qu'**il est prévu respectivement un moyen de maintien (16, 17) pour chaque essuie-glace (81, 82).

7. Véhicule automobile avec un entraînement d'essuie-glace (1) selon la revendication 1.

8. Procédé d'utilisation d'un entraînement d'essuie-glace (1) selon l'une quelconque des revendications 1 à 6, dans lequel on fait tourner l'arbre d'entraînement (210) dans la position de maintien (P3), lorsqu'une commande, en particulier une commande du véhicule, détecte l'état de repos chargé (H).

9. Procédé selon la revendication 8, **caractérisé en ce que** la commande détecte l'état de repos chargé (H), lorsque l'entraînement d'essuie-glace (1) se trouve dans l'état de repos non chargé (R), et que
• le véhicule automobile dépasse une vitesse limite, ou que
• l'arbre d'entraînement (210) tourne dans le sens de rotation (22).
